Europäisches Patentamt

(19) European Patent Office

Office européen des brevets

(11) Publication number: **0 026 570**
**B1**

(12) **EUROPEAN PATENT SPECIFICATION**

(45) Date of publication of patent specification: **02.11.83**

(51) Int. Cl.³: **F 16 C 15/00, F 16 F 15/30**

(21) Application number: **80302799.4**

(22) Date of filing: **13.08.80**

(54) **Centre assemblies for flywheels, and flywheels incorporating such assemblies**

(30) Priority: **26.09.79 GB 78981**

(43) Date of publication of application:
**08.04.81 Bulletin 81/14**

(45) Publication of the grant of the patent:
**02.11.83 Bulletin 83/44**

(84) Designated Contracting States:
**AT BE CH DE FR GB IT LI LU NL SE**

(56) References cited:
**DE - A - 2 622 295**
**FR - A - 2 403 486**
**GB - A - 1 534 393**
**GB - A - 2 028 979**
**US - A - 3 724 288**
**US - A - 3 788 162**
**US - A - 4 085 627**
**US - A - 4 123 949**
**US - A - 4 176 563**

(73) Proprietor: **THE GARRETT CORPORATION**
**9851-9951 Sepulveda Boulevard**
**P.O. Box 92248, Los Angeles,**
**California 90009 (US)**

(72) Inventor: **Friedericy, Johan A.**
**17611 San Roque Lane**
**Huntingdon Beach California 92647 (US)**

(74) Representative: **Taylor, Duncan Alistair, et al**
**KILBURN & STRODE 30 John Street**
**London WC1N 2DD (GB)**

Courier Press, Leamington Spa, England

Centre assemblies for flywheels, and flywheels incorporating such assemblies

Field of the Invention

This invention relates to flywheels, and especially but not exclusively to flywheels which are intended to store energy in connection with efforts to prevent the waste of energy, for example, in transport. Typically, a flywheel is coupled through a suitable transmission, such as an electrical or mechanical transmission, to the wheels of a vehicle, in such a way that the kinetic energy of the vehicle can be transferred to the flywheel on slowing down of the vehicle, and returned from the flywheel to the vehicle when acceleration of the vehicle is required.

The Prior Art

Flywheels have long been manufactured of heavy isotropic materials such as steel, in either solid or laminated constructions. It was believed that the high mass of such a flywheel would permit the greatest amount of energy storage. More recently, however, it has been found to be desirable to manufacture flywheels with a rim construction of a wound fibre, such as glass fibre or Kevlar, in an epoxy matrix. One example of such a flywheel is shown in British Patent No. 1,534,393.

Although lightweight flywheels of this type have their energy storage capability reduced because of their lower mass as compared with steel flywheels, these lightweight flywheels have a substantial advantage in that they are capable of safe operation at extremely high rotational velocities. Because kinetic energy storage is not only proportional to mass but is also proportional to the square of the velocity, these high velocities enable the flywheels to attain energy storage levels comparable to more massive flywheels. Further, because of the layered composite material rim construction, destruction of such a flywheel, even at high velocity, would result in a more gradual disintegration of the wheel than would be the case with metallic solid disc flywheels. Thus, lightweight containment materials may safely be used. Comparable flywheels of heavy isotropic material can propel large chunks of material such as steel upon destruction. This requires much more massive containment devices.

The utilization of lightweight, high strength materials throughout the flywheel construction is necessary to permit the desired high rotational velocity. However, while it has been possible to construct a rim assembly having high circumferential strength characteristics out of composite materials, it has been necessary to utilize light metals, such as aluminium alloys, for the centre or spider, so that the high radial strength requirement could be maintained. While aluminium is a very light metal, it was desirable to find an even lighter material which could permit even higher peripheral speeds to be attained for comparable energy storage capacity with less rotor mass while providing the necessary structural characteristics.

Knight's U.S. Specification No. 4123949 discloses a flywheel having a rim formed of circumferentially wound resin impregnated filaments which is held on to a hub by an array of pairs of parallel bands embracing the external surface of the rim, the bands of each pair being disposed one on each side of the hub.

According to the present invention the spokes in a flywheel centre assembly extend from the centre diametrically, each spoke comprising bars of longitudinal filamentary material arranged in groups for example with the bars of each group extending in one diametrical orientation which is different from the diametrical orientation of the bars of the/or each other group, and with the bars of each group being spaced apart from one another in a general axial direction of the assembly by the bars of the other group or groups, the various bars being secured together to form a unitary assembly. The arrangement enabling the spokes to extend diametrically and constituting bars which themselves form a unitary assembly at the flywheel centre means that centrifugal forces arising during high speed rotation are precisely aligned with the elongation of the spokes, and are transmitted directly to the flywheel centre assembly.

The filaments in the hoops of the Knight specification are inclined to the radial centrifugal force, and at the centre of the flywheel the angle of inclination can be quite high, and in consequence the filaments in the bands experience tangential forces which tend to cause the bands to bow circumferentially away from each other in use. In addition such filaments in tension have little strength to resist transverse forces.

Preferably a rim of a flywheel is bonded around the ends of the spokes.

The centrifugal force at the radially outer perimeter of a flywheel rim is substantially greater than at the radially inner perimeter, and the arrangement of bonding the rim around the ends of the spokes in accordance with the present invention is a further advantage over Knight whose bands embrace the radially outer periphery of the flywheel rim and are subjected to tension originating in the most highly stressed portion of the rim.

The centre assembly built up from the assembled spokes can have sufficient strength to operate at high speeds while being lighter than a metal centre assembly. The diametrically arrangement of the fibres in the spokes enables the centre assembly being built up of filamentary material embedded in a matrix to be strong enough to withstand the radial loads applied in use.

The invention also relates to a method of constructing a flywheel as set out in Claim 13.

The invention may be carried into practice in various ways, but one specific embodiment will now be described by way of example, with reference to the accompanying drawings.

Brief Description of the Drawings

Figure 1 is an end view of a flywheel embodying the present invention;

Figure 2 is a side view of the flywheel of Figure 1 with the rim of the flywheel omitted;

Figure 3 is a view similar to Figure 2, but with the flywheel rotated through 45° about its axis, and showing an intermediate stage in the construction of the flywheel;

Figure 4 is a cross section view taken along the line 4—4 of Figure 3; and

Figures 5 and 6 are views showing two alternative steps in the construction of part of the flywheel of Figures 1 to 4.

Detailed Description of the Preferred Embodiment

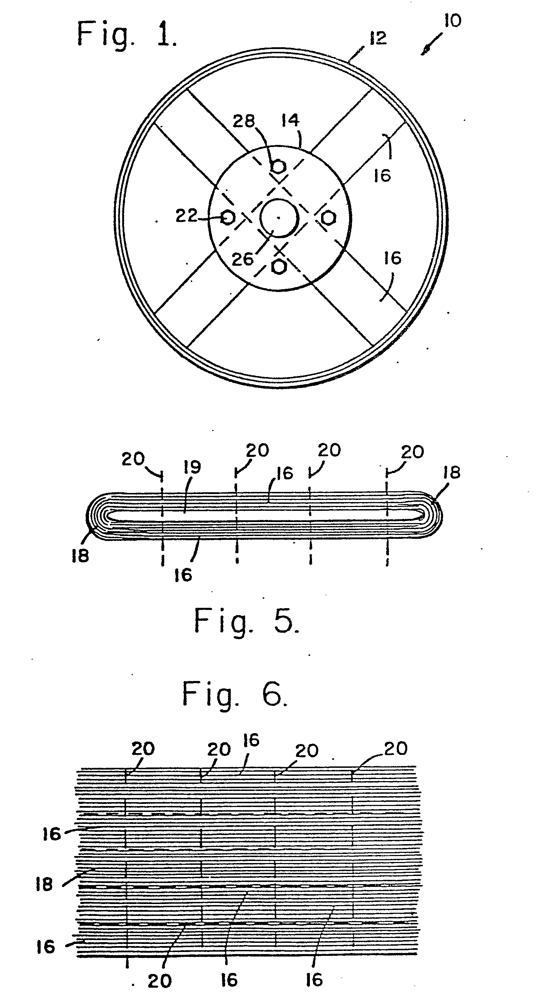

Referring now to the drawings, Figure 1 illustrates a flywheel 10 comprising a rim 12 mounted on a wheel centre or spider having a hub 14 and spokes 16. The rim 12 may be of any desired construction; in the present, preferred example the rim 12 is constructed of a fibre material, such as glass fibre, which is wound circumferentially and embedded in a matrix material such as an epoxy resin. Such a rim construction yields the high circumferential strength which is required for the rim. Depending upon its thickness, the rim 12 may be unitary or may consist of several separate layers or segments; also, the rim 12 may be designed to have, when static, either a circular shape, or a non-circular shape which becomes more nearly circular under the effect of centrifugal forces during operation.

The spokes 16 are formed by a plurality of bars, consisting of unidirectional laid up or wound fibres which are embedded in a matrix. In the preferred embodiment, these bars are made up of a fibreglass reinforced epoxy material. However, if desired, other fibres, such as Kevlar-29, Kevlar-49 or various high strength graphites, such as Thornel 300, may be utilized. The resin known as Dow Corning DER332 epoxy is preferred for use as the matrix material.

One manner of manufacture of such bars is illustrated in Figure 5. In this method, filamentary material 18 is wound over a flat sided mandrel 19 in such a configuration that the portions of the fibres along the flat sides of the mandrel are unidirectional. These unidirectional fibres are then embedded in epoxy. After curing, the construction is cut as shown by the dashed lines 20 for the purpose of forming the bars for the spokes 16.

Figure 6 illustrates an alternative method for constructing the bars, in which method filaments are laid down in a unidirectional configuration, an epoxy matrix is applied and the resulting system is cured under pressure in a mould or an autoclave. Cutting along the dashed lines 20 forms the bars in the desired shape and size. It will be understood that whether the construction method of Figure 5 or Figure 6 is utilized, rounding of the ends or other forming of the bars may be required for use in the wheel centre.

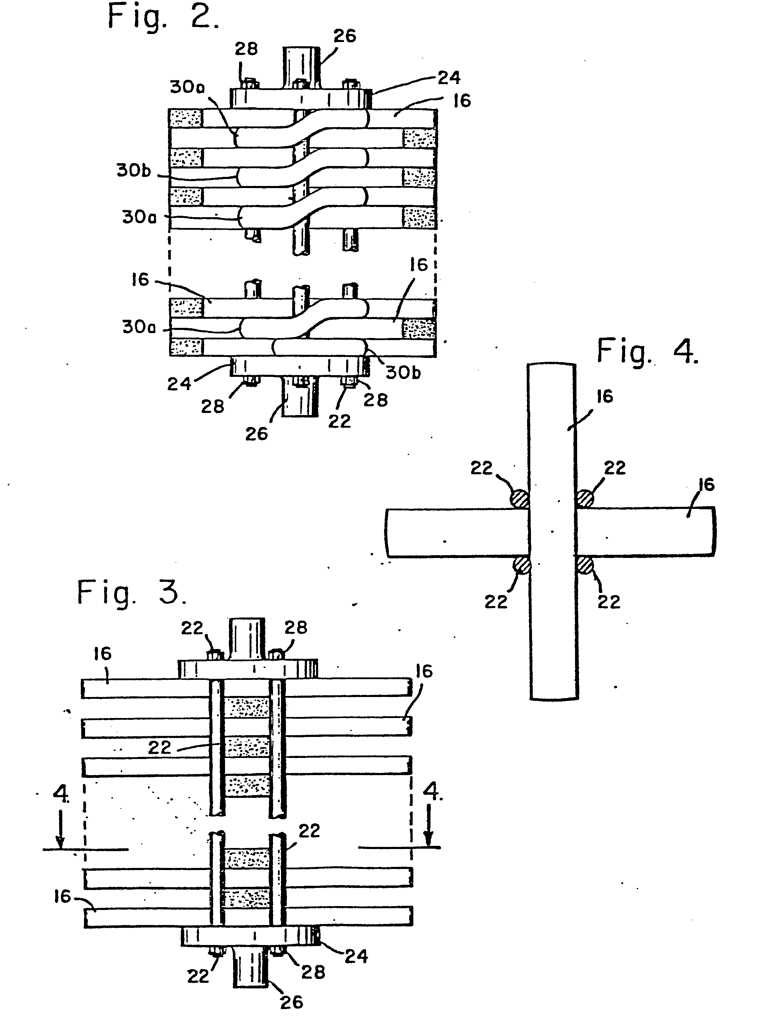

No matter how the bars are constructed, the fibres run longitudinally of the bars. The bars are then stacked in the manner shown in Figures 3 and 4, with each bar being stacked at right angles to the bar immediately below it. In this manner, the wheel centre or spider is built up, with each spoke having its fibre structure radially aligned. The bars are then bonded together by a suitable material such as a controlled glue line bonding agent. This bonding agent must be sufficiently flexible to allow for outward growth of the bars when subjected to a centrifugal force field during rotation.

The integrity of the assembly may be further assured by the use of a plurality of tie bolts 22 and nuts 28. The tie bolts 22 are, in this example, positioned in the corners formed between adjacent spokes 16 and additionally serve to connect two end plates 24, one at each end of the hub 14. Each end plate 24 has an axle portion 26 by which the flywheel 10 may be mounted on suitable bearings and connected to an input/output shaft for carrying energy to and from the flywheel 10.

During operation the lightweight flywheel 10 rotates with a very high peripheral velocity, typically of the order of 750 m/sec. As a result of the substantial degree of centrifugal force at such velocities, the central portion of each tie bolt 22 may be forced outward, so that the tie bolts adopt a bowed shape. The end plates 24 could then be drawn inwardly along the rotational axis of the flywheel, possibly seriously affecting the flywheel performance. To prevent this bowing, lashings 30, which are preferably high strength fibre ropes impregnated with epoxy but may also be either an epoxy or phenolic or polyimide coated reinforcing wire or yarn, are wound around the tie bolts 22. Two of these lashings 30a and 30b are wound around the hub 14, in what is approximately a two-start helix, passing between the bars which make up the spokes 16. As a result, the lashing means become stepped in the manner illustrated in Figure 2 around the axis of the hub. After final tightening of the nuts 28, the entire assembly may then be cured to produce a solid, secure and lightweight wheel centre. If necessary, the outer ends of each of the bars may be sanded or otherwise shaped for uniformity and the rim 12 bonded or wound on to form the flywheel 10.

If the rim 12 is so constructed that, when completely unstressed, it is circular, but is mounted in the preferred non-circular configuration, the bars forming the spokes 16 must withstand a radially inwards force of about 700—900 kgf/linear cm. of rotor length when the flywheel is operating. The use of the tie bolts 22 and the lashings 30 provides structural integrity for the hub 14 under these conditions while the radial alignment of the filaments permits the bars to withstand these forces.

**Claims**

1. A flywheel centre assembly, comprising a plurality of spokes (16) extending outwardly from the centre (14) of the assembly, and comprising bars of a generally filamentary material extending generally longitudinally of the spokes and embedded in a matrix, characterised in that the spokes (16) are formed by respective groups of diametrically extending bars, with the bars of each group being spaced apart from one another in the direction axial of the assembly by the bars of the other group or groups, and the various bars forming a stack and being secured together to form a unitary assembly.

2. An assembly as claimed in Claim 1 in which the bars of each group extend in one diametrical orientation which is different from the diametrical orientation of the bars of the/or each other group.

3. An assembly as claimed in Claim 1 or Claim 2 in which each of the bars have opposed flat surfaces facing in directions parallel to the axis of the assembly, and adjacent bars within the stack of bars have part of their flat surfaces in contact with one another.

4. An assembly as claimed in any preceding claim in which the cross-section of each bar is constant along the length of the bar.

5. An assembly as claimed in any preceding claim which also includes end plates (24) between which the stack of bars is sandwiched, and means (22) drawing the end plates together to put the bars in axial compression.

6. An assembly as claimed in Claim 5 in which the means (22) drawing the end plates together comprises a plurality of axially extending elongate tension members, each lying in the angle between two adjacent spokes (16) of the assembly.

7. An assembly as claimed in Claim 6 in which the tension members (22) are collectively enclosed by one or more lashings (30) wound around the tension members (22), and passing through the spaces between the bars of each group.

8. An assembly as claimed in any of the preceding claims, in which each of the bars extends from the tip of one spoke (16) to the tip of a second spoke (16).

9. An assembly as claimed in Claim 8, in which each of the bars extends from the tip of one spoke (16) to the tip of a diametrically opposed spoke (16), and is secured at the mid-zone of its length to the adjacent bars of the stack of bars.

10. A flywheel comprising a centre assembly as claimed in any of the preceding claims, and a rim (12), bonded around the ends of the spokes.

11. A flywheel as claimed in Claim 10 in which the rim (12) comprises a circumferentially-oriented filamentary material in a matrix.

12. A flywheel as claimed in Claim 10 or Claim 11, in which the rim (12) is non-circular when the flywheel is stationary, and adopts a generally circular shape when the flywheel is rotating at a certain speed.

13. A method of constructing a flywheel (10) comprising the steps of forming a plurality of bars (16) having substantially uniform cross sections of filamentary material embedded in a matrix with the filaments generally longitudinally aligned by positioning filaments in generally parallel orientation, embedding said filaments in a matrix, and cutting said matrix with cuts including cuts transversely to the filaments to set the lengths of the bars; stacking a plurality of said bars at a central portion of the flywheel with the filaments of adjacent bars at a substantial angle to each other; securing the stacked bars in a unitary structure; and mounting a rim (12) at the outer ends of the stacked bars.

14. A method as claimed in Claim 13 wherein the step of forming the bars comprises winding filamentary material around a mandrel (19) with an elongated portion in generally parallel orientation before embedding the material in the matrix.

15. A method as claimed in Claim 13 or Claim 14 in which the filamentary material is glass fibre and the matrix is of epoxy resin.

16. A method as claimed in any of Claims 13—15 wherein the step of securing the stacked bars comprises positioning end plates (24) at opposed axial ends of the stack and inwardly biasing the end plates by bolts (22) connected between them.

17. A method as claimed in Claim 16 including the additional step of securing lashing means (30) around the bolts and between the bars.

18. A method as claimed in Claim 17 including the step of curing the stacked and secured bars.

**Revendications**

1. Structure centrale de volant, comprenant une pluralité de rayons (16) dirigés vers l'extérieur à partir du centre (14) de la structure et comprenant des barres de matière sensiblement filamentaire s'étendant sensiblement dans la direction longitudinale des rayons et noyée dans une matrice, caractérisée en ce que les rayons (16) sont constitués par des groupes respectifs de barres disposées diamètralement, les barres de chaque groupe étant séparées les unes des autres, dans la direction axiale de la structure, par les barres du ou des autres groupes, les différentes barres constituant une pile et étant fixées ensemble pour former une structure unitaire.

2. Structure suivant la revendication 1, caractérisée en ce que les barres de chaque groupe sont disposées avec une orientation diamétrale qui est différente de l'orientation diamétrale des barres du ou de chaque autre groupe.

3. Structure suivant la revendication 1 ou la revendication 2, caractérisée en ce que chacune des barres comporte des surfaces planes opposées tournées dans des directions parallèles à l'axe de la structure, et en ce que les barres adjacentes dans la pile de barres ont leurs surfaces planes partiellement en contact les unes avec les autres.

4. Structure suivant l'une quelconque des revendications précédentes, caractérisée en ce que la section transversale de chaque barre est constante sur toute la longueur de la barre.

5. Structure suivant l'une quelconque des revendications précédentes, caractérisée en ce qu'elle comporte également des plaques d'extrêmité (24), entre lesquelles est tenue la pile de barres, et des moyens (22) de rapprochement des plaques d'extrêmité l'une de l'autre pour mettre les barres en compression axiale.

6. Structure suivant la revendication 5, caractérisée en ce que les moyens (22) de rapprochement des plaques d'extrêmité comprennent une pluralité de pièces de tension allongées, disposées axialement, placées chacune dans l'angle entre deux rayons adjacents (16) de la structure.

7. Structure suivant la revendication 6, caractérisée en ce que les pièces de tension (22) sont collectivement enserrées par une ou plusieurs ligatures (30), enroulées autour des pièces de tension (22) et passant à travers les espaces entre les barres de chaque groupe.

8. Structure suivant l'une quelconque des revendications précédentes, caractérisée en ce que chacune des barres s'étend de l'extrêmité extérieure d'un rayon (16) à l'extrêmité extérieure d'un deuxième rayon (16).

9. Structure suivant la revendication 8, caractérisée en ce que chacune des barres s'étend de l'extrêmité extérieure d'un rayon (16) à l'extrêmité extérieure d'un rayon (16) diamètralement opposé et est fixée, vers le milieu de sa longueur, aux barres adjacentes de la pile de barres.

10. Volant comprenant une structure centrale suivant l'une quelconque des revendications précédentes et une jante (16) fixée autour des extrémités des rayons.

11. Volant suivant la revendication 10, caractérisé en ce que la jante (12) comprend une matière filamentaire, orientée circonférentiellement, dans une matrice.

12. Volant suivant la revendication 10 ou la revendication 11, caractérisé en ce que la jante (12) est non circulaire lorsque le volant est au repos et prend une forme sensiblement circulaire lorsque le volant tourne à une certaine vitesse.

13. Procédé de fabrication d'un volant (10), caractérisé en ce qu'il consiste à: préparer une pluralité de barres (16), de section transversale sensiblement constante, en matière filamentaire noyée dans une matrice, les filaments étant alignés sensiblement longitudinalement par mise en place des filaments suivant une orientation sensiblement parallèle; noyer ces filaments dans une matrice; découper la matrice par des coupes comprenant des coupes transversales aux filaments pour déterminer les longueurs des barres; empiler une pluralité de ces barres, à une partie centrale du volant, les filaments des barres adjacentes formant un angle substantiel les uns avec les autres; relier les barres empilées en une structure unitaire; et fixer une jante (12) aux extrêmités extérieures des barres empilées.

14. Procédé suivant la revendication 13, caractérisé en ce que l'opération de préparation des barres comprend l'enroulement d'une matière filamentaire autour d'un mandrin (19), avec une partie allongée disposée en orientation sensiblement parallèle, avant de noyer la matière dans la matrice.

15. Procédé suivant la revendication 13 ou la revendication 14, caractérisé en ce que la matière filamentaire est de la fibre de verre et la matrice est une résine époxy.

16. Procédé suivant l'une quelconque des revendications 13 à 15, caractérisé en ce que l'opération de liaison des barres empilées comprend la mise en place de plaques d'extrêmité (24) aux extrêmités axiales opposées de la pile et le rapprochement des plaques d'extrêmité vers l'intérieur ay moyen de boulons (22) tendus entre ces dernières.

17. Procédé suivant la revendication 16, caractérisé en ce qu'il comporte également la fixation de ligatures (30) autour des boulons et entre les barres.

18. Procédé suivant la revendication 17, caractérisé en ce qu'il comporte une opération de durcissement des barres empilées et reliées.

**Patentansprüche**

1. Schwungradmittenanordnung mit einer Vielzahl von Speichen, die sich von der Mitte der Anordnung nach außen erstrecken, und mit Stäben aus faserförmigem Material, die sich in Längsrichtung der Speichen erstrecken und die in eine Matrix eingebettet sind, dadurch gekennzeichnet, daß die Speichen (16) durch entsprechende Gruppen von diametral verlaufenden Stäben gebildet sind, wobei die Stäbe einer jeden Gruppe im Abstand voneinander in Richtung axial zur Anordnung um die Stäbe der anderen Gruppe oder Gruppen versetzt sind, und wobei die verschiedenen Stäbe einen Stapel bilden sowie miteinander zur Ausbildung einer einstückigen Anordnung befestigt sind.

2. Anordnung nach Anspruch 1, dadurch gekennzeichnet, daß die Stäbe einer jeden Gruppe sich in einer diametralen Orientierung erstrecken, die unterschiedlich von der diametralen Orientierung der Stäbe der oder jeder anderen Gruppe sind.

3. Anordnung nach Anspruch 1 oder 2, dadurch gekennzeichnet, daß jeder der Stäbe gegenüberliegende ebene Flächen aufweist, die parallel zur Achse der Anordnung gerichtet sind, und daß Teile der ebenen Flächen benachbarter Stäbe innerhalb des Stapels von Stäben in Kontakt miteinander stehen.

4. Anordnung nach einem der vorausgehenden Ansprüche, dadurch gekennzeichnet, daß der Querschnitt eines jeden Stabes über seine gesamte Länge konstant ist.

5. Anordnung nach einem der vorausgehenden Ansprüche, gekennzeichnet durch Endplatten (24), zwischen denen die Stapel von Stäben sandwichartig angeordnet sind, und eine Vorrichtung (22), die die Endplatten zusammenzieht, damit die Stäbe in axiale Kompression gebracht werden.

6. Anordnung nach Anspruch 5, dadurch gekennzeichnet, daß die Vorrichtung (22), die die Endplatten zusammenzieht, eine Vielzahl von in axialer Richtung verlaufenden länglichen Zuggliedern aufweist, deren jedes in dem Winkel zwischen zwei benachbarten Speichen (16) der Anordnung liegt.

7. Anordnung nach Anspruch 6, dadurch gekennzeichnet, daß die Zugglieder (22) gemeinsam durch eine oder mehrere Laschen (30) umschlossen sind, die um die Zugglieder (22) gewickelt sind, und die durch die Räume zwischen den Stäben einer jeden Gruppe geführt sind.

8. Anordnung nach einem der vorausgehenden Ansprüche, dadurch gekennzeichnet, daß jeder der Stäbe sich von der Spitze einer Speiche (16) zur Spitze einer zweiten Speiche (16) erstreckt.

9. Anordnung nach Anspruch 8, dadurch gekennzeichnet, daß jeder der Stäbe sich von der Spitze einer Speiche (16) zur Spitze einer diametral gegenüberliegenden Speiche (16) erstreckt und in der mittleren Zone seiner Längserstreckung mit den benachbarten Stäben des Stapels von Stäben befestigt ist.

10. Schwungrad mit einer zentrischen Anordnung nach einem der Ansprüche 1—9, und mit einem Rand (12), der um die Enden der Speichen herum befestigt ist.

11. Schwungrad nach Anspruch 10, dadurch gekennzeichnet, daß der Rand (12) ein in Umfangsrichtung orientiertes Fasermaterial in einer Matrix aufweist.

12. Schwungrad nach Anspruch 10 oder 11, dadurch gekennzeichnet, daß der Rand (12) nichtkreisförmig ausgebildet ist, wenn das Schwungrad stationär ist, und Kreisform annimmt, wenn das Schwungrad mit einer bestimmten Geschwindigkeit rotiert.

13. Verfahren zur Herstellung eines Schwungrades, dadurch gekennzeichnet, daß eine Vielzahl von Stäben (16) aufgebildet werden, die im wesentlichen kreisförmigen Querschnitt aus Fasermaterial besitzen, das in eine Matrix eingebettet ist, wobei die fasern in Längsrichtung ausgerichtet sind, indem sie in einer parallelen Orientierung positioniert werden, daß die Fasern in eine Matrix eingebettet werden und daß die Matrix mit Schnitten durchtrennt wird, die Schnitte quer zu den Fasern einschließen, um die Längen der Stäbe festzulegen, daß eine Vielzahl dieser Stäbe an einem mittleren Teil des Schwungrades gestapelt wird, wobei die Fasern benachbarter Stäbe in einem verhältnismäßig großen Winkel zueinander angeordnet werden, daß die gestapalten Stäbe in einer einteiligen Anordnung befestigt werden, und daß ein Rand (12) an den äußeren Enden der gestapelten Stäbe befestigt wird.

14. Verfahren nach Anspruch 13, dadurch gekennzeichnet, daß das Ausbilden der Stäbe ein Wickeln des Fasermateriales um einen Dorn (19) mit einem länglichen Teil etwa paralleler Orientierung vor dem Einbetten des Materials in der Matrix einschließt.

15. Verfahren nach Anspruch 13 oder 14, dadurch gekennzeichnet, daß das Fasermaterial Glasfasermaterial ist und daß die Matrix ein Epoxydharz ist.

16. Verfahren nach Ansprüchen 13—15, dadurch gekennzeichnet, daß das Befestigen der gestapelten Stäbe ein Positionieren der Endplatten (24) an entgegengesetzten axialen Enden des Stapels und ein Vorspannen der Endplatten nach innen mit Hilfe von dazwischen gesetzten Bolzen (22) einschließt.

17. Verfahren nach Anspruch 16, dadurch gekennzeichnet, daß die Laschen (30) um die Bolzen herum und zwischen den Stäben befestigt werden.

18. Verfahren nach Anspruch 17, dadurch gekennzeichnet, daß die gestapelten und befestigten Stäbe gehärtet werden.

Fig. 1.

Fig. 5.

Fig. 6.

Fig. 2.

Fig. 4.

Fig. 3.

0 026 570

2